# FASCICULE DE BREVET EUROPEEN

(11) **EP 1 805 934 B1**
(45) Date de publication et mention de la délivrance du brevet: **03.12.2008**
(21) Numéro de dépôt: 05795087.5
(22) Date de dépôt: 24.10.2005
(51) Int. Cl.: H04L 12/18, H04L 12/56

(54) **Procédé de communication dans un réseau comprenant des noeuds filaires et des noeuds non filaires**
Verfahren zur Kommunikation in einem Netzwerk mit verdrahteten und drahtlosen Knoten
Method for communicating in a network comprising wired and wireless nodes

(30) Priorité: 26.10.2004 FR 0411401
(43) Date de publication de la demande: 11.07.2007
(73) Titulaire: Somfy SAS, 74300 Cluses (FR)
(72) Inventeur: ORSAT, Jean-Michel, F-74300 CHATILLON-SUR-CLUSES (FR)
(74) Mandataire: Bugnion Genève
(86) Numéro de dépôt international: PCT/IB2005/003161
(87) Numéro de publication internationale: WO 2006/046104

(56) Documents cités:
- WO-A-01/59995
- US-A1- 2004 157 548

## Description

L'invention concerne un procédé de communication dans un réseau comprenant des noeuds dits non filaires munis de moyens de communication permettant la communication par voie non filaire et des noeuds dits filaires munis de moyens de communication permettant la communication par voie filaire et par voie non filaire. Elle concerne également un réseau pour la mise en oeuvre de ce procédé.

II est connu de faire communiquer dans un réseau domotique ou immotique les différents éléments du réseau par l'intermédiaire de liaisons sans fil par ondes radioélectriques ou par ondes infrarouges. L'utilisation de ces liaisons de communication sans fil est reconnue pour la flexibilité et la facilité d'installation qu'elle procure. En revanche, la portée de ces liaisons peut se trouver limitée notamment dans le cas de transmissions à travers des cloisons, des murs ou des plafonds.

Dans le cas d'installations où se posent de tels problèmes, il est courant d'utiliser des éléments répéteurs, de manière à assurer la transmission d'informations entre les différents éléments du réseau malgré la présence d'obstacles. Cependant, les installations munies de répéteurs présentent des inconvénients tels que l'augmentation des délais de transmission des informations et de la durée d'utilisation du spectre.

Une autre solution consiste à utiliser un réseau câblé complémentaire pour acheminer les informations d'une pièce du bâtiment à l'autre. La portée des liaisons sans fil nécessaire se limite alors à la distance entre les éléments communiquant uniquement par l'intermédiaire de liaisons sans fil et l'élément le plus proche relié au réseau câblé.

La principale caractéristique des installations connues utilisant des éléments répéteurs est de prévoir et transmettre en même temps qu'une information de commande d'un équipement du bâtiment, un certain nombre d'informations nécessaires à l'acheminement des données.

La demande de brevet WO 01/78307 décrit un réseau domotique dans lequel n'importe quel équipement piloté peut devenir répéteur. Ainsi, un équipement peut recevoir des signaux transmis par différentes routes en utilisant les équipements pilotés existants. Dans ce réseau, des tables de routage sont dupliquées d'un équipement répéteur à un autre dans un mode de réglage. De cette manière, il est possible d'initialiser pour chaque équipement, une table de routage, lui permettant de recevoir des informations et de les retransmettre à un autre équipement par liaison radio.

Dans le même ordre d'idée, la demande de brevet WO 02/098060 décrit un procédé d'identification, par un élément, des différents éléments du réseau qui l'entourent, par construction d'une table d'identifiants pouvant être destinataires d'un message.

On connaît du brevet US 5,875,179 un procédé de détermination dynamique de la longueur du chemin parcouru par un message, de manière à optimiser les temps de communication en privilégiant les chemins courts.

On connaît du brevet US 4,912,461 dans le domaine du contrôle d'accès par lecture de cartes magnétiques, un réseau de communication comprenant des éléments répéteurs fonctionnant sur le principe du routage et des moyens pour modifier le signal de routage si un retour d'information d'un élément destinataire auquel un message est transmis n'est pas reçu dans un temps donné.

On connaît enfin du brevet US 5,905,442 un système dans lequel les éléments peuvent communiquer par différents types de liaison. La revendication 105 définit un mode de transmission dans lequel un ordre de commande de modification d'état est transmis par l'intermédiaire d'une liaison de communication filaire et dans lequel le retour d'information est transmis par l'intermédiaire d'une liaison de communication sans fil.

De même, des systèmes gérant les interactions entre des communications filaires et non filaires sont décrits dans les demandes de brevets japonais JP 2003-134030 et JP 2001-156804.

La demande JP 2003-134030 décrit en particulier un réseau câblé, auquel on ajoute une fonction radio et une fonction de conversion de protocole filaire/radio pour ajouter de la flexibilité au système. La redondance des chemins de communication est, dans cette demande de brevet, un moyen d'augmenter la fiabilité du système.

La demande JP 2001-156804 décrit également un système dans lequel les noeuds du réseau câblé peuvent agir comme répéteurs pour transmettre une communication entre deux noeuds non filaires.

Dans aucun de ces documents, il n'est prévu de mesure permettant de s'assurer que chaque noeud destinataire ne reçoit qu'une fois le message transmis éventuellement par des chemins différents.

Au contraire, pour assurer une bonne fiabilité de transmission, il est courant de privilégier une reproduction systématique des signaux émis sur des réseaux complémentaires (câblés). C'est le cas par exemple dans le document JP 2003-134030. De ce fait, il est possible que certaines commandes soient reçues et interprétées plusieurs fois, ce qui pose des problèmes dans le cas de commandes séquentielles par exemple. De plus, le système peut connaître des problèmes de gestion et d'occupation du spectre.

On retrouve un problème un peu similaire dans le brevet US 6,690,276. Dans ce brevet, il s'agit de surveiller les données transmises sur un bus de communication entre une unité centrale et des récepteurs. Lorsqu'un récepteur reçoit un message d'un émetteur sans fil, il le traduit en signal digital et le transmet à l'unité de contrôle. Celle-ci, à réception, envoie un message de confirmation. Un second récepteur recevant un message d'un émetteur le place dans une mémoire. Il écoute ensuite un éventuel message de confirmation. S'il en reçoit un, il vérifie si le premier message est identique à celui qu'il a en mémoire. Si tel est le cas, la mémoire est effacée, sinon, le second message est transmis à l'unité de contrôle. Ce brevet US 6,690,276 propose donc une solution pour éviter la double transmission d'un même message provenant de sources différentes à un organe central sur un bus filaire, de manière à éviter un trafic inutile de signal sur le réseau câblé. II n'apporte donc pas d'élément de réponse dans le cadre d'un système dans lequel des éléments répéteurs doivent s'assurer d'acheminer un message une seule fois alors qu'il existe une pluralité de chemins différents (filaire ou non filaire) vers un noeud destinataire. La demande US2004/157548 décrit un procédé de communication selon le préambule de la revendication 1.

Le but de l'invention est de fournir un procédé de communication améliorant les procédés de communication connus et obviant aux inconvénients précités. En particulier, l'invention propose un procédé de communication permettant de gérer les liaisons de communication filaires et les liaisons de communication non filaires pour répondre aux problèmes posés par les distances entre les différents éléments et les portées de ces éléments. En particulier, le procédé selon l'invention permet de déterminer quand et comment faire appel au réseau câblé complémentaire pour une transmission optimale d'informations et d'ordres de commande, sans nécessairement faire appel à une construction lourde de tables d'identifiants de zone ou de tables de routage.

Le procédé de communication selon l'invention est caractérisé en ce qu'un noeud filaire répète par voie non filaire un message reçu exclusivement par voie filaire s'il ne reçoit pas un signal de confirmation de réception du message, la transmission de ce signal de confirmation débutant dans un premier créneau temporel à partir de la réception du message par voie filaire.

Les revendications dépendantes 2 à 12 définissent différents modes d'exécution du procédé de communication.

Le réseau selon l'invention comprend des noeuds dits non filaires munis de moyens de communication permettant la communication par voie non filaire et des noeuds dits filaires munis de moyens de communication permettant la communication par voie filaire et par voie non filaire. II est caractérisé en ce qu'il comprend des moyens matériels et logiciels pour la mise en oeuvre du procédé de communication défini précédemment.

Au moins les noeuds filaires peuvent comprendre des mémoires pour stocker notamment des informations de routage des communications.

Le dessin annexé représente, à titre d'exemples, différentes procédures d'un mode d'exécution du procédé de communication selon l'invention et un mode de réalisation d'un réseau domotique permettant la mise en oeuvre du procédé.

La figure 1 est un schéma d'un mode de réalisation d'un réseau selon l'invention.

Les figures 2a à 2c sont des schémas explicatifs de différentes procédures de communication pouvant survenir en fonction de la position des noeuds expéditeur et destinataire du réseau.

La figure 3 est un schéma expliquant le principe de comparaison des signaux reçus par un noeud filaire.

Les figures 4a à 4c sont des ordinogrammes explicatifs des différentes procédures de communication pouvant survenir en fonction de la position des noeuds expéditeur et destinataire du réseau.

La figure 5 est un schéma d'un noeud filaire.

La figure 6 est un schéma d'un noeud non filaire.

Un réseau de communication permettant la mise en oeuvre du procédé de communication selon l'invention comprend des noeuds émetteurs-récepteurs d'ordres bidirectionnels présentant des moyens de communication par voie non filaire. Il relie différents équipements domotiques ou immotiques, par exemple des équipements d'éclairage, des équipements motorisés de fermeture, d'occultation ou de protection solaire, des équipements de chauffage et/ou de ventilation et des dispositifs de commande de ces équipements. Certains des noeuds de ce réseau sont en outre reliés par un bus de transmission de données.

Le bus de communication a pour but de transmettre, par exemple d'une pièce d'un bâtiment à une autre, des messages par voie filaire, si la communication par voie non filaire entre noeuds n'est pas possible ou mauvaise du fait d'une trop grande distance ou de la présence d'éléments faisant obstacle.

On peut par exemple disposer un noeud filaire dans chaque pièce du bâtiment, de manière à s'assurer d'atteindre tous les noeuds présentant uniquement des moyens de communication non filaire par l'intermédiaire d'au moins un noeud filaire. Les noeuds filaires constituent alors des répéteurs de messages. Ils peuvent éventuellement eux-même consister en des équipements domotiques pilotables.

Les différents noeuds partagent un même protocole de communication permettant la transformation de messages non filaires en messages filaires et inversement.

Dans le cas où deux protocoles différents (par exemple deux protocoles de communication non filaire sont utilisés dans deux systèmes domotiques d'un même bâtiment) seraient amenés à coexister, le fonctionnement du procédé qui sera décrit en détail par la suite reste valable. Cependant, les messages non filaires devront le cas échéant être convertis.

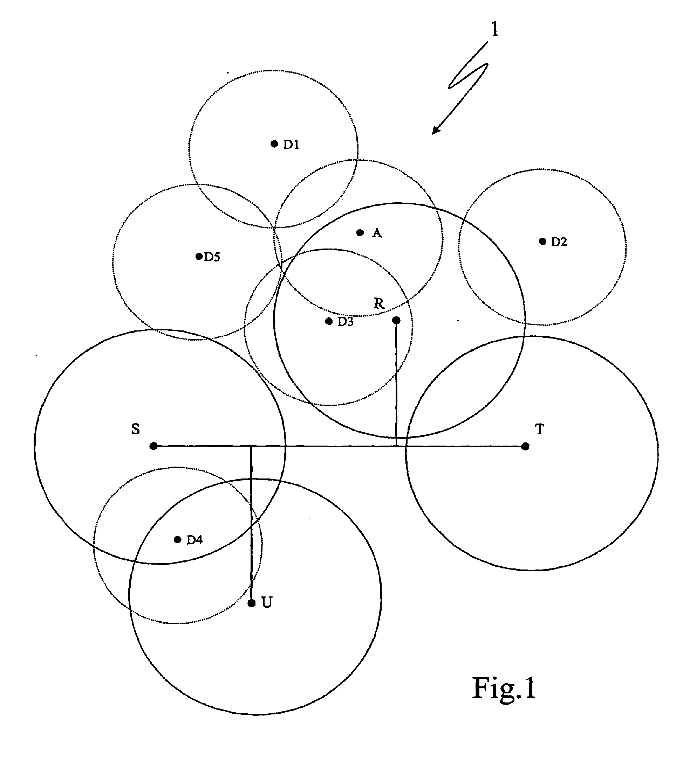

Un mode de réalisation d'un réseau (1) permettant de mettre en oeuvre le procédé de communication selon l'invention est représenté à la figure 1.

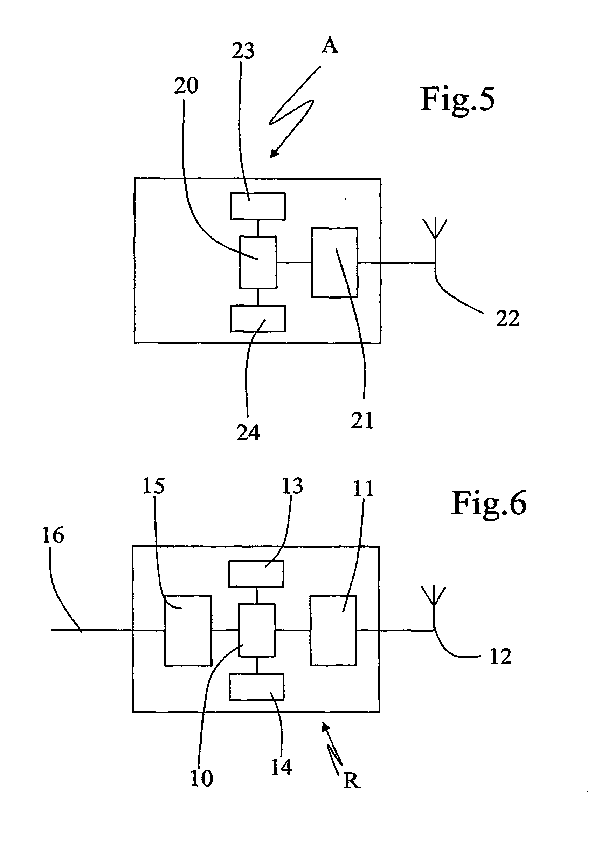

Dans ce réseau, le noeud A est le noeud expéditeur d'informations et les noeuds D1 à D5 et D8, des noeuds destinataires avec lesquels le noeud A veut successivement communiquer. Les noeuds D1 à D5 et D8 comprennent, comme le noeud A représenté à la figure 5, une unité logique de traitement 20 relié à une mémoire 23, à des moyens de communication non filaire 21, 22 et, éventuellement, à des moyens 24 de pilotage d'un équipement électrique. Les moyens de communication sans fil comprennent par exemple une antenne 22 et un émetteur-récepteur d'ondes radioélectriques 21 dans le cas où cette communication est assurée par ondes radioélectriques. Ces noeuds sont appelés noeuds non filaires. Ils peuvent également communiquer par le biais de signaux infrarouges.

Les noeuds R, S, T et U sont des noeuds filaires. Ils comprennent, comme le noeud R représenté à la figure 6, une unité logique de traitement 10 relié à une mémoire 13, à des moyens de communication non filaire 11, 12, à des moyens de communication filaire 15, 16 et, éventuellement, à des moyens 14 de pilotage d'un équipement électrique. Les moyens de communication non filaire comprennent par exemple une antenne 12 et un émetteur-récepteur d'ondes radioélectriques 11 dans le cas où cette communication est assurée par ondes radioélectriques. Les moyens de communication filaire comprennent par exemple une liaison filaire 16 telle qu'une liaison à un bus et des moyens 15 de modulation-démodulation de signaux.

Afin de simplifier la représentation, les noeuds représentés sur les figures sont entourés par des cercles qui symbolisent globalement d'une part la portée d'émission et d'autre part la sensibilité de réception. Lorsque deux cercles se croisent, il est supposé que les noeuds correspondants à ces cercles peuvent communiquer entre eux.

Dans les exemples décrits, les noeuds filaires sont uniquement destinés à répéter les messages. II n'est par conséquent pas nécessaire qu'ils connaissent les identifiants des noeuds non filaires. Les noeuds filaires se contentent de répéter les messages pour les acheminer vers un noeud destinataire, qui est lui, appairé avec le noeud expéditeur.

Dans le cas de construction de tables de routage au fur et à mesure des communications, les noeuds répéteurs peuvent stocker en mémoire les identifiants des noeuds non filaires qu'ils détectent être à portée, de manière à construire ces tables.

Les noeuds filaires répètent systématiquement et instantanément les messages reçus ou émis par voie non filaire. Ainsi, tous les noeuds filaires ont connaissance des messages reçus ou émis par l'un d'entre eux ou par un noeud non filaire.

Tous les noeuds peuvent partager une même clé, par exemple un identifiant de réseau commun (clé maison) ou une clé de cryptage.

Les noeuds répéteurs pourraient également être des noeuds expéditeurs ou des noeuds destinataires. Le protocole décrit, permettant d'éviter une double transmission d'un même message de commande vers un noeud destinataire, reste applicable dans ce cas.

Inversement, les noeuds non filaires sont destinés à être de type expéditeur ou destinataire et non du type répéteur. Cependant, le cas de noeuds non filaires de type répéteur pourrait être envisagé, même si l'on tend à vouloir éviter un trop grand nombre de répétitions de transmission d'informations par l'intermédiaire de liaisons non filaires par exemple radioélectriques afin de satisfaire aux normes, notamment aux normes européennes.

Le noeud expéditeur A est par exemple une télécommande radio et les noeuds destinataires D1 à D5, des récepteurs d'ordres liés à des actionneurs ou à des équipements électriques d'un bâtiment.

On peut considérer qu'un noeud filaire, par exemple le noeud T et un noeud non filaire, par exemple D8, se trouvent confondus en un même endroit, par exemple dans un même boîtier. Le noeud filaire T connaît alors la position du noeud non filaire D8. Un message du noeud expéditeur A reçu par le réseau câblé sera reçu par le noeud filaire T et retransmis directement au noeud non filaire D8. De même, un signal de confirmation du noeud non filaire D8 n'est pas nécessairement émis conventionnellement mais transmis directement au noeud filaire T afin qu'il soit acheminé vers le noeud expéditeur A.

Différents cheminements d'informations sont décrits en référence à la figure 1 représentant les localisations des différents noeuds les uns par rapport aux autres.

### Cas où le noeud non filaire D1 est le noeud destinataire :

Le noeud non filaire D1 ne peut être atteint que par le noeud expéditeur A et non par l'un des noeuds filaires qui sont hors de portée. Le noeud expéditeur A émet un message, les noeuds non filaires D1, D3 et D5 et le noeud filaire R étant à portée du noeud A reçoivent ce message. Le noeud non filaire D1 envoie au noeud expéditeur A un message de confirmation, qu'aucun des noeuds filaires ne peut recevoir.

Le noeud expéditeur A reçoit un message de confirmation. Le noeud filaire R retransmet sur le réseau filaire le message reçu du noeud expéditeur A à destination des autres noeuds du réseau. Les noeuds filaires T, S et U reçoivent le message par voie filaire, mais ne le reçoivent pas par voie non filaire. Les noeuds filaires T, S et U essayent ensuite et chacun leur tour d'envoyer le message au noeud non filaire destinataire D1, sans succès, ce dernier se trouvant hors de portée. Le noeud filaire R essaye enfin d'envoyer le message au noeud non filaire destinataire D1, sans succès, ce dernier se trouvant hors de portée.

Lorsque tous les noeuds filaires ont envoyé le message, la communication prend fin. Le noeud destinataire D1 a bien reçu le message, une seule fois. Le noeud expéditeur A peut également, à réception du signal de confirmation émis par le noeud destinataire D1, le retransmettre à destination des noeuds filaires afin de mettre fin à la communication.

(Ce cheminement du message ne devrait pas se présenter, dans la mesure où les portées de noeuds filaires sont relativement grandes pour couvrir une à plusieurs pièces d'un bâtiment).

### Cas où le noeud non filaire D2 est le noeud destinataire :

Le noeud destinataire D2 est hors de portée du noeud expéditeur A, mais est à portée du noeud filaire R. Le noeud expéditeur A émet un message et les noeuds non filaires D1, D3 et D5 et le noeud filaire R étant à portée, le reçoivent. Les noeuds D1, D3 et D5 n'étant pas destinataires, ils ne prennent pas le message en considération. Le noeud filaire R retransmet le message sur le réseau filaire. Les noeuds filaires T, S et U reçoivent le message par voie filaire, mais ne le reçoivent pas par voie non filaire. L'un des noeuds filaires qui n'a pas reçu le message par voie non filaire en provenance du noeud A prend la parole, par exemple le noeud T, puis les noeuds U, S, R. Le noeud destinataire D2 reçoit le message retransmis par le noeud filaire R et celui-ci renvoie un signal de confirmation à destination du noeud expéditeur A. Le noeud filaire R retransmet le signal de confirmation sur le réseau filaire de même que par voie non filaire à destination de A.

Il s'agit là d'un cas très particulier de communication qui ne devrait se présenter que très rarement compte tenu des portées et sensibilité de réception, que ce soit dans le réseau filaire ou non filaire. Celles-ci ont été représentées volontairement réduites pour la compréhension.

### Cas où le noeud non filaire D3 est le noeud destinataire :

Le noeud destinataire D3 est à portée du noeud expéditeur A et du noeud non filaire R. Le noeud expéditeur A émet un message et les noeuds non filaires D 1, D3 et D5 et le noeud filaire R étant à portée, le reçoivent. Les noeuds D1 et D5 n'étant pas destinataires, ils ne prennent pas le message en considération.

Le noeud filaire R retransmet le message sur le réseau filaire. Tous les noeuds filaires écoutent un éventuel message de confirmation. Le noeud D3 étant destinataire, il émet un message de confirmation à destination du noeud expéditeur A. Le noeud filaire R reçoit également le signal de confirmation et le retransmet sur le réseau filaire. Cette retransmission met fin à la communication.

### Cas où le noeud non filaire D4 est le noeud destinataire :

Le noeud destinataire D4 est à portée des noeuds filaires S et U. Le noeud expéditeur A émet un message et les noeuds non filaires D1, D3 et D5 et le noeud filaire R étant à portée, le reçoivent. Les noeuds D1, D3 et D5 n'étant pas destinataires, ils ne prennent pas le message en considération. Le noeud filaire R retransmet le message sur le réseau filaire. Les noeuds filaires T, S et U reçoivent un message par voie filaire, mais ne le reçoivent pas par voie non filaire. L'un des noeuds filaires qui n'a pas reçu le message par voie non filaire en provenance du noeud A prend la parole, par exemple le noeud T, afin d'envoyer le message au noeud destinataire. Aucun signal de confirmation n'étant reçu par le noeud filaire T, un autre noeud prend la parole, par exemple le noeud filaire U. Le noeud destinataire D4 reçoit le message répété par le noeud filaire U et renvoie au noeud U un signal de confirmation à destination du noeud expéditeur A. Le noeud filaire U retransmet le signal de confirmation sur le réseau filaire. Le noeud filaire R reçoit le message par le réseau filaire et le retransmet par voie non filaire au noeud expéditeur A. La retransmission du signal de confirmation sur le réseau filaire met fin à la communication.

### Cas où le noeud non filaire D5 est le noeud destinataire :

Le noeud destinataire D5 et le noeud filaire R sont à portée du noeud expéditeur A. Le noeud expéditeur A émet un message et les noeuds non filaires D1, D3 et D5 et le noeud filaire R étant à portée, le reçoivent. Les noeuds D1 et D3 n'étant pas destinataires, ils ne prennent pas le message en considération. Le noeud filaire R retransmet le message sur le réseau filaire. Les noeuds filaires T, S et U reçoivent le message par voie filaire, mais ne le reçoivent pas par voie non filaire. Ils écoutent un éventuel signal de confirmation. Le noeud destinataire D5, qui a reçu directement le message de noeud expéditeur A émet un signal de confirmation. Le noeud filaire S reçoit également le signal de confirmation de la part du noeud D5 et le retransmet sur le réseau filaire à destination du noeud expéditeur A. Le noeud filaire R reçoit le signal de confirmation émis par le noeud expéditeur D5 via le noeud filaire S à destination du noeud expéditeur A. Le noeud filaire R en déduit que le noeud expéditeur A et le noeud destinataire D5 ont communiqué directement.

Dans ces exemples, le noeud filaire qui reçoit un message par une voie non filaire et la retransmet par voie filaire sait qu'il est l'initiateur de la retransmission de commande et donc qu'il doit retransmettre par voie non filaire un éventuel signal de confirmation qu'il reçoit par voie filaire (ou par voie non filaire : cas de D2).

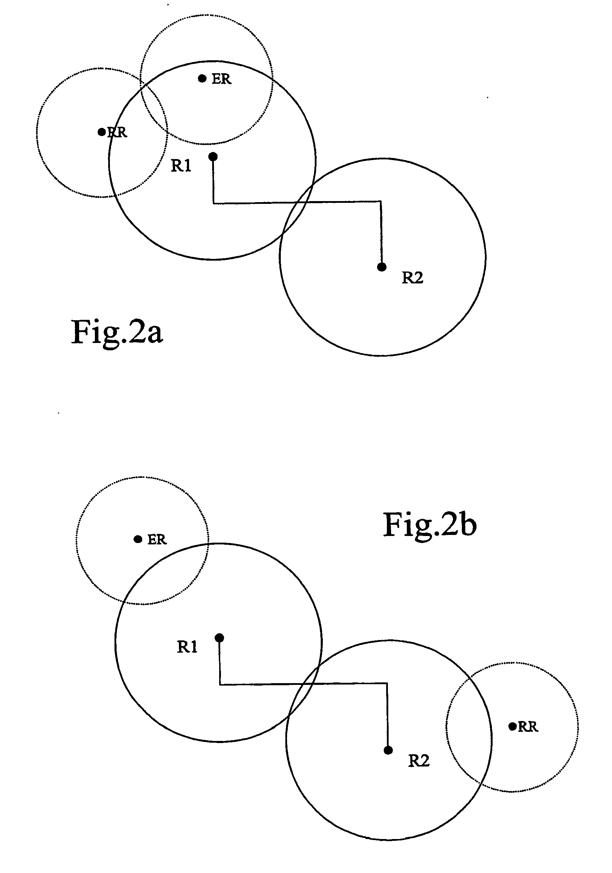

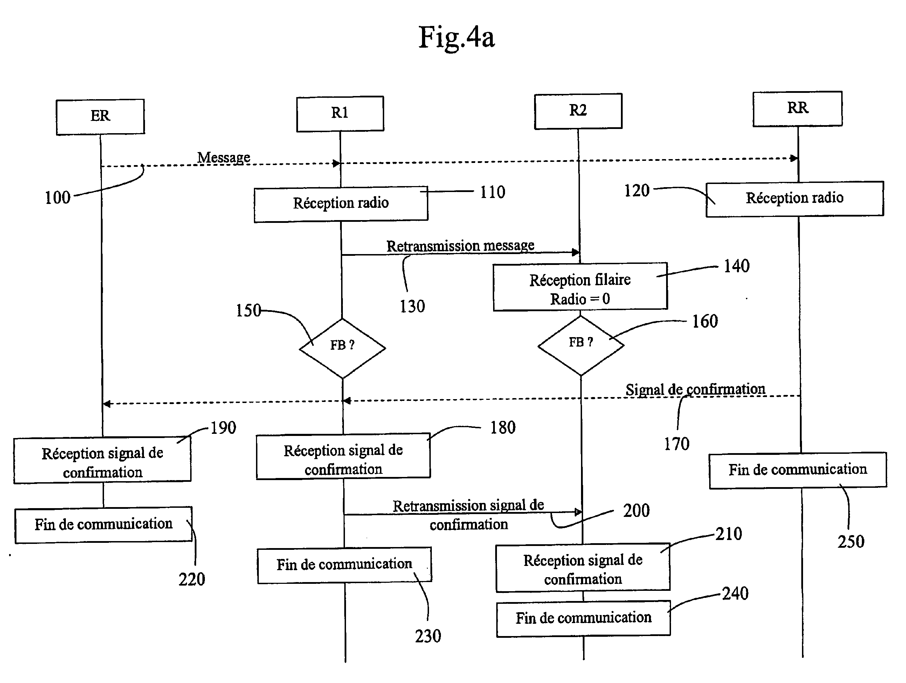

Les figures 2a à 2c représentent des exemples de réseaux dont les ordinogrammes des figures 4a à 4c illustrent respectivement les fonctionnements.

Sur ces figures, le point référencé ER représente un noeud expéditeur non filaire, le point référencé RR représente un noeud destinataire non filaire, les points référencés R1, R2 et R3 représentent des noeuds filaires.

Les figures 4a à 4c représentent respectivement sous forme d'organigrammes les différentes étapes permettant la communication entre un noeud expéditeur et un noeud destinataire dans les différents cas présentés aux figures 2a à 2c. Les transmissions de messages ou de signaux de confirmation par voie non filaire sont représentés par des flèches en pointillés et les transmissions de messages ou de signaux de confirmation par voie filaire, par des flèches en traits pleins.

La figure 4a représente sous forme d'organigramme les différentes étapes permettant la communication entre le noeud expéditeur ER et le noeud destinataire dans le réseau représenté à la figure 2a.

Dans une première étape 100, le noeud expéditeur ER émet un message par voie non filaire. Dans une étape 110, un des noeuds filaires R1 et, dans une étape 120, le noeud destinataire RR reçoivent ce message par voie non filaire.

Dans une étape 130, le noeud filaire R1 recevant le message par voie non filaire, transmet par voie filaire ce message au noeud filaire R2. Plusieurs noeuds filaires ne peuvent en principe pas transmettre un message simultanément par voie filaire. En effet, ces noeuds fonctionnent sur le principe du LBT ("Listen Before Transmit" en français « Ecouter avant d'émettre » - solution largement éprouvée et très fiable). D'autres solutions équivalentes pourraient éventuellement être mises en oeuvre sans que cela influe sur le principe de l'invention.

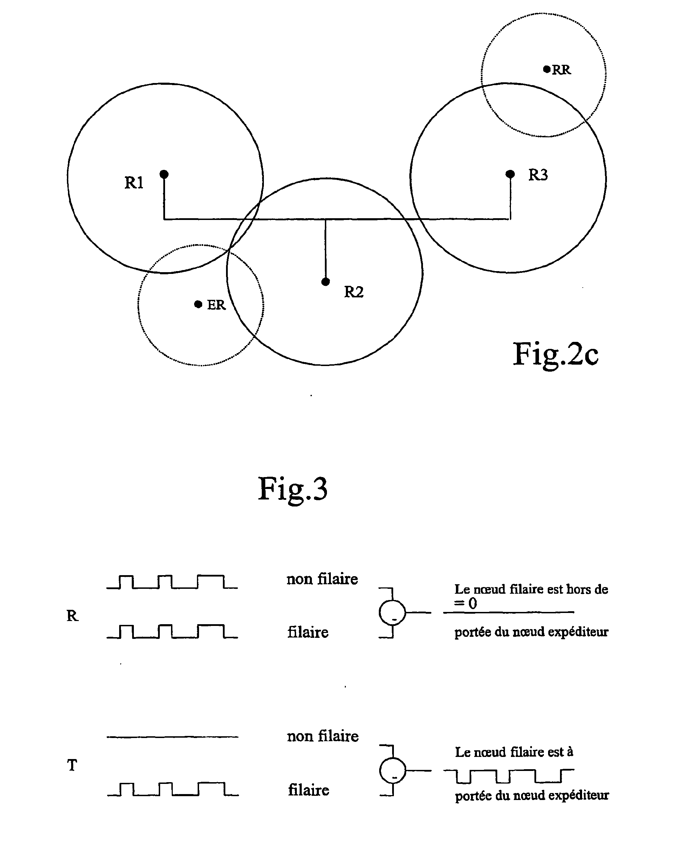

Dans une étape 140, le noeud filaire R2 reçoit le message par voie filaire et constate ne pas l'avoir reçu par voie non filaire. Pour faire ce constat, le noeud filaire R2 compare les signaux qu'il reçoit par voie filaire et par voie non filaire. Comme représenté à la figure 3, en fonction du signal résultant de cette comparaison, le noeud filaire R2 déduit s'il est ou non à portée du noeud expéditeur ER. On privilégiera pour la retransmission du message par voie non filaire, si nécessaire, un noeud filaire hors de portée du noeud expéditeur, c'est-à-dire un noeud filaire ayant reçu le message par voie filaire mais n'ayant pas reçu le message par voie non filaire. La comparaison entre les signaux reçus par voie non filaire et par voie filaire peut consister en une comparaison numérique des signaux reçus, éventuellement avec un léger filtrage (par exemple par intercorrélation) ou en une comparaison des contenus des trames. On distingue alors, à un instant donné de la transmission, un groupe de noeuds filaires hors de portée du noeud expéditeur et un groupe de noeuds à portée du noeud expéditeur.

Aux étapes 150 et 160, les noeuds filaires passent dans un mode d'écoute, c'est-à-dire qu'ils écoutent, pendant un créneau temporel T1 (valant par exemple 5 ms, valeur normative), si un début de transmission d'un éventuel message de confirmation FB au message reçu par voie filaire est émis par voie non filaire.

Dans une étape 170, le noeud destinataire RR émet par voie non filaire un signal de confirmation en réponse au message qu'il a reçu à l'étape 120.

Le noeud filaire R1 et le noeud expéditeur ER étant à portée du noeud destinataire RR reçoivent le début de transmission du signal de confirmation au cours du créneau temporel T1 et poursuivent donc leur écoute du message respectivement aux étapes 180 et 190.

Dans une étape 200, le noeud filaire R1 recevant le signal de confirmation, retransmet celui-ci par voie filaire au noeud filaire R2. L'étape 200 a lieu sensiblement en simultané avec les étapes 180 et 190.

Dans une étape 210, le noeud filaire R2 reçoit le signal de confirmation.

Aux étapes 220, 230, 240 et 250, les différents noeuds du réseau mettent fin à la session de communication.

Dans ce cas, aucune autre communication par voie filaire ou non filaire n'est alors plus nécessaire. Le réseau non filaire formé par les noeuds non filaires est alors auto-suffisant en terme de portée.

En utilisant le principe du LBT (« Listen Before Transmit ») pour le réseau filaire selon lequel un noeud doit écouter ce qui se passe sur le réseau avant de transmettre des informations et en appliquant un principe similaire pour les communications non filaires reçues, le risque de transmettre doublement un même message est écarté. Ainsi, ce principe permet d'éviter une double retransmission d'un même message à un noeud destinataire.

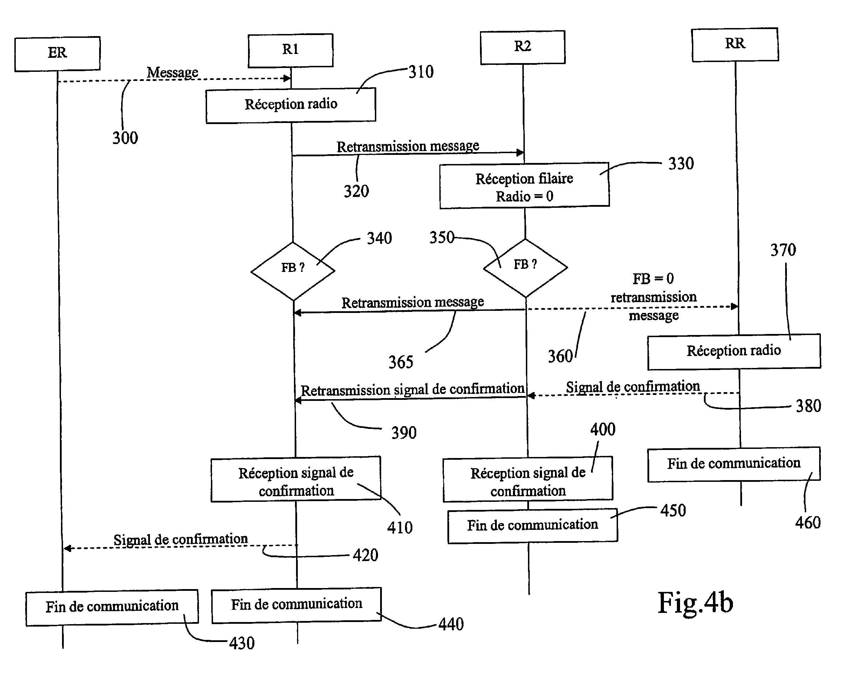

La figure 4b représente sous forme d'organigramme les différentes étapes permettant la communication entre le noeud expéditeur ER et le noeud destinataire dans le réseau représenté à la figure 2b.

Dans une première étape 300, le noeud expéditeur ER émet un message par voie non filaire. Dans une étape 310, un des noeuds filaires R1 reçoit ce message.

Dans une étape 320, le noeud filaire R1 recevant le message par voie non filaire, transmet par voie filaire ce message au noeud filaire R2. On notera que les étapes 300 et 320 sont sensiblement simultanées.

Dans une étape 330, le noeud filaire R2 reçoit le message par voie filaire et constate ne pas l'avoir reçu par voie non filaire. Pour faire ce constat, le noeud filaire R2 compare les signaux qu'il reçoit par voie filaire et par voie non filaire. Comme représenté à la figure 3, en fonction du signal résultant de cette comparaison, le noeud filaire R2 déduit s'il est ou non à portée du noeud expéditeur ER. On privilégiera pour la retransmission du message par voie non filaire, si nécessaire, un noeud filaire hors de portée du noeud expéditeur, c'est-à-dire un noeud filaire ayant reçu le message par voie filaire mais n'ayant pas reçu le message par voie non filaire.

Aux étapes 340 et 350, les deux noeuds filaires passent dans un mode d'écoute, c'est-à-dire qu'ils écoutent, pendant un créneau temporel T1 (valant par exemple 5 ms), si un début de transmission d'un éventuel message de confirmation FB au message reçu par voie filaire est émis par voie non filaire.

Si le destinataire n'est pas dans la zone de portée du noeud expéditeur, il ne reçoit pas le message et donc ne peut y répondre. Pendant la durée T1, les différents noeuds filaires, ayant reçu le message par voie non filaire et/ou filaire écoutent un éventuel signal de confirmation.

Le noeud filaire R2 ne recevant pas de début de transmission d'un signal de confirmation pendant la durée T1, retransmet, dans une étape 360, par voie non filaire, le message qu'il a reçu par voie filaire. Il retransmet également, à une étape 365, ce message sur le réseau filaire simultanément.

Dans une étape 370, le noeud destinataire RR reçoit ce message.

Dans une étape 380, le noeud destinataire RR émet par voie non filaire un signal de confirmation en réponse au message qu'il a reçu à l'étape 370.

Le noeud filaire R2 étant à portée du noeud destinataire RR reçoit le début d'une transmission du signal de confirmation et retransmet simultanément ce qu'il reçoit par voie filaire dans une étape 390.

Le signal de confirmation est reçu par le noeud filaire R2 lors d'une étape 400 et par le noeud R1 lors d'une étape 410. II est retransmis, au cours d'une étape 420 de manière non filaire du noeud filaire R1 au noeud expéditeur ER. Ces étapes (400, 410, 420) sont sensiblement simultanées.

La transmission du signal de confirmation est moins critique que la retransmission du message, puisque les problèmes associés à une double transmission sont moindres. En revanche, elle peut être traitée de la même manière que la transmission du message (ou plus simplement en suivant le chemin inverse de celui ayant conduit au succès de transmission du message).

Si le premier noeud filaire répéteur, qui a tenté de retransmettre par voie non filaire le message, ne reçoit aucun signal de confirmation, ce signal peut être répété par un autre noeud non filaire hors de portée du noeud expéditeur puis par un noeud filaire à portée du noeud expéditeur mais autre que celui à l'origine de la retransmission filaire, jusqu'à ce que le signal de confirmation soit entendu et soit retransmis vers le noeud expéditeur. On peut préférentiellement choisir que ce soit un noeud filaire hors de portée du dernier noeud filaire (émetteur du signal radio précédent) qui prenne alors la parole. De cette manière, on répète le procédé selon l'invention pour transmettre le signal de confirmation, c'est-à-dire privilégier pour la retransmission, un noeud hors de portée du dernier noeud émetteur. Ce principe permet de converger rapidement vers le noeud à atteindre.

La priorité entre les noeuds peut par exemple être gérée par des créneaux temporels différents pour les différents noeuds. Ainsi, un noeud ayant reçu le message exclusivement par voie filaire prendra la parole plus tôt qu'un noeud ayant reçu le message à la fois par voies filaire et non filaire.

Cela permet de donner des priorités de parole, sans exclure la répétition du message par un quelconque noeud filaire du réseau.

Chaque créneau temporel est initialisé à la fin de la transmission d'un message sur le réseau filaire.

Aux étapes 430, 440, 450 et 460, les différents noeuds du réseau mettent fin à la session de communication.

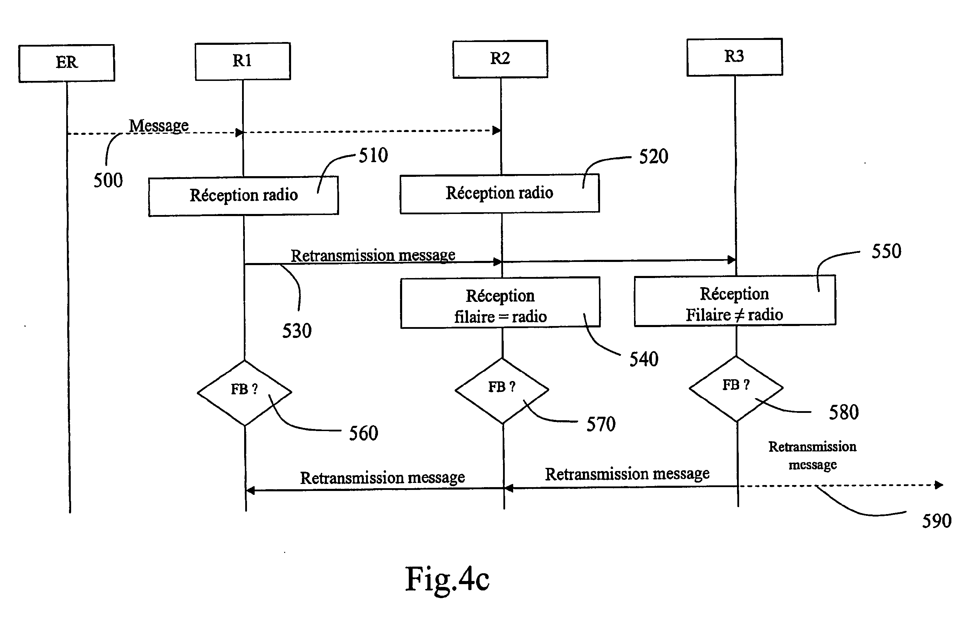

La figure 4c représente sous forme d'organigramme les différentes étapes permettant la communication entre le noeud expéditeur ER et le noeud destinataire dans le réseau représenté à la figure 2c. Cette figure illustre de manière plus visible le principe de sélection d'un noeud pour la retransmission d'un message.

Le réseau représenté à la figure 2c comprend trois noeuds filaires, dont deux sont dans la zone de portée du noeud expéditeur ER.

Dans une première étape 500, le noeud expéditeur ER émet un message par voie non filaire. Aux étapes 510 et 520, deux des noeuds filaires R1 et R2 reçoivent ce message.

Dans une étape 530, l'un de ces deux noeuds filaires retransmet le message au cours de sa réception par voie filaire.

Dans une étape 540, le noeud filaire R2 reçoit le message par voie filaire et constate qu'il a déjà reçu le message voie non filaire et, dans une étape 550, le noeud filaire R3 reçoit le message par voie filaire et constate ne pas l'avoir reçu par voie non filaire. Pour faire ces constats, les noeuds filaires R2 et R3 comparent les signaux qu'ils reçoivent par voie filaire et par voie non filaire. Comme représenté à la figure 3, en fonction du signal résultant de cette comparaison, les noeuds filaires R2 et R3 déduisent s'ils sont ou non à portée du noeud expéditeur ER. On privilégiera pour la retransmission du message par voie non filaire, si nécessaire, un noeud filaire hors de portée du noeud expéditeur, c'est-à-dire un noeud filaire ayant reçu le message par voie filaire mais n'ayant pas reçu le message par voie non filaire.

Aux étapes 560, 570 et 580, tous les noeuds filaires écoutent alors un éventuel signal de confirmation émis par le noeud destinataire. Dans la mesure où aucun signal de confirmation n'est reçu, les noeuds filaires considèrent alors que le noeud destinataire à atteindre est situé hors de portée du noeud expéditeur et par conséquent, probablement hors de portée des noeuds filaires R1 et R2 dans l'entourage du noeud expéditeur, c'est-à-dire hors de portée des noeuds filaires ayant reçu le message du noeud expéditeur ER par voie non filaire.

Le noeud R1 étant à l'origine de la retransmission par voie filaire, il est écarté provisoirement pour retransmettre le message par voie non filaire.

Les noeuds filaires R2 et R3 ayant comparé les messages qu'ils ont reçus par voie non filaire et par voie filaire le message est, dans une étape 590, retransmis de manière non filaire par le noeud filaire R3 ayant reçu le message uniquement par voie filaire.

On privilégie, dans un deuxième temps, si le noeud destinataire n'a pas reçu le message, suite à la retransmission du message de manière non filaire par R3, de retransmettre par l'un des noeuds filaires à portée du noeud expéditeur, le message.

Si plusieurs noeuds filaires ont, comme le noeud filaire R3, reçu le message uniquement par voie filaire, le signal est retransmis par un de ces noeuds suivant le principe du LBT, un des noeuds prenant la parole à l'expiration du créneau temporel T1, au cours duquel chaque noeud vérifie ne pas avoir reçu un début de transmission d'un signal de confirmation de réception du message. Le signal est retransmis par ces différents noeuds d'une manière successive tant qu'aucun signal de confirmation ne débute dans le créneau temporel T1. Au cours de cette retransmission par voie filaire, le message est également répété sur le réseau filaire. Un nouveau créneau temporel T1 est initialisé lors de chaque retransmission du message sur le réseau filaire. Les noeuds ayant reçu le message par voie filaire et non filaire ne prennent éventuellement la parole qu'à l'issue d'un deuxième créneau temporel T2 légèrement supérieur au premier créneau temporel T1 (T2 valant par exemple 7ms), si aucun message n'a été retransmis par voie filaire au cours du créneau T2. Le deuxième créneau temporel T2 est comme le premier créneau temporel T1, initialisé après chaque retransmission de message sur le réseau filaire.

Selon le procédé objet de l'invention, c'est un noeud filaire hors de portée du noeud expéditeur qui va, en priorité, retransmettre le message de manière non filaire afin de tenter de le communiquer au noeud destinataire.

Ce procédé est basé sur l'hypothèse suivante : si le noeud destinataire est hors de portée du noeud expéditeur, alors il faut envoyer le message à transmettre du noeud expéditeur au noeud destinataire par le biais d'un noeud répéteur se trouvant également hors de portée du noeud expéditeur.

II se peut que dans certains cas cette hypothèse ne soit pas vérifiée. Par exemple, dans certains cas rares (cas du noeud D2 sur le figure 1), le noeud destinataire peut être hors de portée du noeud expéditeur et le seul noeud répéteur permettant d'atteindre le noeud destinataire peut être également à portée du noeud expéditeur. Pour assurer le fonctionnement du procédé de communication même dans ces cas, les noeuds filaires hors de portée du noeud expéditeur sont, conformément à l'invention, prioritaires pour retransmettre le message vers le noeud destinataire. Une fois que les noeuds filaires hors de portée du noeud expéditeur ont successivement tenté de retransmettre le message, les noeuds filaires à portée du noeud expéditeur vont à leur tour tenter de transmettre le message au noeud destinataire.

Alternativement, si on répète le principe de l'invention, on détermine à chaque nouvelle retransmission nécessaire du message un nouveau groupe de noeuds filaires hors de portée du dernier noeud (filaire) émetteur. Cela permet de converger plus rapidement vers une transmission efficace.

Dans le cas (cas du noeud D1 : peu probable si le réseau filaire est bien agencé) où le noeud destinataire du signal de confirmation (c'est-à-dire le noeud expéditeur) est à portée du noeud expéditeur (c'est-à-dire le noeud destinataire), mais pas à portée d'un des noeuds filaires, ces derniers vont se comporter comme si le message n'avait pas atteint sa destination. Le noeud expéditeur va, lui, recevoir le signal de confirmation. Il peut, pour éviter des retransmissions inutiles par l'intermédiaire des noeuds filaires, à nouveau émettre un signal de fin de transmission qui sera reconnu par tous les noeuds répéteurs.

Les voies de communication filaires peuvent notamment consister en des conducteurs électriques' destinés exclusivement à la transmission de données ou en des conducteurs électriques destinés à la transmission de données et d'énergie.

Les voies de communication non filaires peuvent notamment consister en des liaisons par ondes radioélectriques ou en des liaisons par faisceaux lumineux par exemple de type infrarouge.

Le procédé peut être utilisé de manière dynamique, il peut également être utilisé pour construire des tables de routage, telles que chaque noeud non filaire soit associé à un des noeuds filaires lorsque celui-ci détecte le noeud non filaire dans sa zone de portée.

## Revendications

1. Procédé de communication dans un réseau (1) comprenant des noeuds (A, D1, D2, D3, D4, D5) dits non filaires munis de moyens (21, 22) de communication permettant la communication par voie non filaire et des noeuds (R, S, T, U) dits filaires munis de moyens (11, 12, 15, 16) de communication permettant la communication par voie filaire et par voie non filaire, **caractérisé en ce qu'**un noeud filaire répète par voie non filaire un message reçu exclusivement par voie filaire s'il ne reçoit pas un signal de confirmation de réception du message, la transmission de ce signal de confirmation débutant dans un premier créneau temporel (T1) à partir de la réception du message par voie filaire.

2. Procédé de communication selon la revendication 1, **caractérisé en ce qu'**un noeud filaire (R, S, T, U) répète par voie filaire un message reçu exclusivement par voie non filaire sytématiquement et sensiblement simultanément à la réception du message reçu par voie non filaire.

3. Procédé de communication selon la revendication 1 ou 2, **caractérisé en ce qu'**un noeud filaire (R, S, T, U) transmet par voie filaire un message émis par voie non filaire, sytématiquement et sensiblement simultanément à l'émission du message par voie non filaire.

4. Procédé de communication selon l'une des revendications précédentes, **caractérisé en ce que** le premier créneau temporel (T1) est initialisé à chaque retransmission du message par voie filaire par un noeud filaire.

5. Procédé selon l'une des revendications précédentes, **caractérisé en ce que** le signal de confirmation de réception du message est reçu par voie filaire ou par voie non filaire.

6. Procédé selon l'une des revendications précédentes, **caractérisé en ce qu'**un noeud filaire (R, S, T, U) ayant répété par voie filaire un message reçu exclusivement par voie non filaire, retransmet de manière non filaire un signal de confirmation de réception du message reçu par voie filaire.

7. Procédé selon l'une des revendications précédentes, **caractérisé en ce que** le message est répété de manière prioritaire par les noeuds filaires (R, S, T, U) ayant reçu le message exclusivement par voie filaire.

8. Procédé selon l'une des revendications 1 à 7, **caractérisé en ce que** le message est répété en priorité par un noeud filaire (R, S, T, U) n'ayant pas reçu par voie non filaire la dernière répétition du message ayant eu lieu.

9. Procédé de communication selon l'une des revendications 7 ou 8, **caractérisé en ce que** la priorité de répétition est gérée par un deuxième créneau temporel (T2) débutant lors de la dernière répétition du message, ce deuxième créneau temporel (T2) alloué aux noeuds non prioritaires étant supérieur au premier créneau temporel (T1) alloué aux noeuds prioritaires.

10. Procédé selon l'une des revendications précédentes, **caractérisé en ce qu'**au cours d'une session de communication, un noeud filaire (R, S, T, U) ne répète, par voie non filaire, qu'une fois un même message.

11. Procédé selon l'une des revendications précédentes, **caractérisé en ce que** les différentes liaisons de communication entre les différents noeuds (A, D1, D2, D3, D4, D5, R, S, T, U) du réseau (1) sont enregistrées afin de construire de manière progressive et dynamique des tables de routage.

12. Procédé selon la revendication précédente, **caractérisé en ce que** les noeuds filaires (R, S, T, U) enregistrent un identifiant des noeuds non filaires (A, D1, D2, D3, D4, D5) dont ils reçoivent un message par voie non filaire.

13. Réseau (1) comprenant des noeuds (A, D1, D2, D3, D4, D5) dits non filaires munis de moyens (21, 22) de communication permettant la communication par voie non filaire et des noeuds (R, S, T, U) dits filaires munis de moyens (11, 12, 15, 16) de communication permettant la communication par voie filaire et par voie non filaire, **caractérisé en ce qu'**il comprend des moyens matériels (10, 13, 20, 23) et logiciels pour la mise en oeuvre du procédé de communication selon l'une des revendications précédentes.

14. Réseau selon la revendication 13, **caractérisé en ce qu'**au moins les noeuds filaires (R, S, T, U) comprennent des mémoires (13) pour stocker notamment des informations de routage des communications.

## Claims

1. A method of communication in a network (1) comprising so-called non-wired nodes (A, D1, D2, D3, D4, D5) provided with communication means (21, 22) enabling communication by non-wired channel and so-called wired nodes (R, S, T, U) provided with communication means (11, 12, 15, 16) enabling communication by wired channel and by non-wired channel, **characterized in that** a wired node repeats by non-wired channel a message received exclusively by wired channel if it does not receive a message receipt confirmation signal, the transmission of this confirmation signal beginning in a first time slot (T1) after the receipt of the message by wired channel.

2. The communication method as claimed in claim 1, **characterized in that** a wired node (R, S, T, U) repeats by wired channel a message received exclusively by non-wired channel, systematically and roughly simultaneously with the reception of the message received by non-wired channel.

3. The communication method as claimed in claim 1 or 2, **characterized in that** a wired node (R, S, T, U) transmits by wired channel a message sent by non-wired channel, systematically and roughly simultaneously with the transmission of the message by non-wired channel.

4. The communication method as claimed in one of the preceding claims, **characterized in that** the first time slot (T1) is initialized on each retransmission of the message by wired channel by a wired node.

5. The method as claimed in one of the preceding claims, **characterized in that** the message receipt confirmation signal is received by wired channel or by non-wired channel.

6. The method as claimed in one of the preceding claims, **characterized in that** a wired node (R, S, T, U) having repeated by wired channel a message received exclusively by non-wired channel, retransmits in a non-wired way a message receipt confirmation signal received by wired channel.

7. The method as claimed in one of the preceding claims, **characterized in that** the message is repeated in a priority manner by the wired nodes (R, S, T, U) having received the message exclusively by wired channel.

8. The method as claimed in one of claims 1 to 7, **characterized in that** the message is repeated as a priority by a wired node (R, S, T, U) not having received by non-wired channel the latest repetition of the message that has taken place.

9. The communication method as claimed in either of claims 7 and 8, **characterized in that** the repetition priority is managed by a second time slot (T2) beginning on the last repetition of the message, this second time slot (T2) allocated to the non-priority nodes being greater than the first time slot (T1) allocated to the priority nodes.

10. The method as claimed in one of the preceding claims, **characterized in that,** during a communication session, a wired node (R, S, T, U) repeats, by non-wired channel, one and the same message only once.

11. The method as claimed in one of the preceding claims, **characterized in that** the different communication links between the different nodes (A, D1 , D2, D3, D4, D5, R, S, T, U) of the network (1) are recorded in order to construct routing tables progressively and dynamically.

12. The method as claimed in the preceding claim, **characterized in that** the wired nodes (R, S, T, U) store an identifier of the non-wired nodes (A, D1, D2, D3, D4, D5) for which they receive a message by non-wired channel.

13. A network (1) comprising so-called non-wired nodes (A, D1, D2, D3, D4, D5) provided with communication means (21, 22) enabling communication by non-wired channel and so-called wired nodes (R, S, T, U) provided with communication means (11, 12, 15, 16) enabling communication by wired channel and by non-wired channel, **characterized in that** it comprises hardware means (10, 13, 20, 23) and software means for implementing the communication method as claimed in one of the preceding claims.

14. The network as claimed in claim 13, **characterized in that** at least the wired nodes (R, S, T, U) comprise memories (13) for storing in particular communication routing information.

## Patentansprüche

1. Verfahren zur Kommunikation in einem Netzwerk (1), welches sogenannte drahtlose Knotenpunkte (A, D1, D2, D3, D4, D5) mit Kommunikationsmitteln (21, 22), die eine drahtlose Verbindungsübertragung ermöglichen, sowie sogenannte drahtgebundene Kontaktpunkte (R, S, T, U) mit Kommunikationsmitteln (11, 12, 15, 16), die sowohl eine drahtlose als auch eine drahtgebundene Verbindungsübertragung ermöglichen, enthält, **dadurch gekennzeichnet, dass** ein drahtgebundener Knotenpunkt eine Nachricht, welche ausschliesslich drahtgebunden erhalten wurde, drahtlos wiederholt, wenn der Knotenpunkt kein Bestätigungssignal des Empfangs der Nachricht erhält, wobei die Übertragung dieses Bestätigungssignals nach dem drahtgebundenen Empfang der Nachricht in einem ersten Zeitfenster (T1) erfolgt.

2. Verfahren zur Kommunikation nach Anspruch 1, **dadurch gekennzeichnet, dass** ein drahtgebundener Knotenpunkt (R, S, T, U) über den Draht eine Nachricht wiederholt, welche drahtlos am Knotenpunkt angekommen ist, wobei die Wiederholung systematisch und praktisch gleichzeitig mit dem Empfang der drahtlos erhaltenen Nachricht vorgenommen wird.

3. Verfahren zur Kommunikation nach Anspruch 1 oder 2, **dadurch gekennzeichnet, dass** ein drahtgebundener Knotenpunkt (R, S, T, U) über den Draht eine Nachricht übermittelt, die drahtlos ausgegeben wurde, und zwar systematisch und praktisch gleichzeitig mit dem Absenden der Nachricht auf drahtlosem Wege.

4. Verfahren zur Kommunikation nach einem der vorstehenden Ansprüche, **dadurch gekennzeichnet, dass** das erste Zeitfenster (T1) bei jeder Übertragung der Nachricht über den Draht durch einen drahtgebundenen Knotenpunkt initialisiert wird.

5. Verfahren nach einem der vorstehenden Ansprüche, **dadurch gekennzeichnet, dass** das Signal zur Bestätigung des Empfangs der Nachricht über den Draht oder drahtlos empfangen wird.

6. Verfahren nach einem der vorstehenden Ansprüche, **dadurch gekennzeichnet, dass** ein drahtgebundener Knotenpunkt (R, S, T, U) nach einer drahtgebundenen Wiederholung einer Nachricht, die ausschliesslich drahtlos empfangen wurde, ein Bestätigungssignal des Erhalts der Nachricht, die über den Draht empfangen wurde, drahtlos weiter überträgt.

7. Verfahren nach einem der vorstehenden Ansprüche, **dadurch gekennzeichnet, dass** die Nachricht vordringlich über die drahtgebundenen Knotenpunkte (R, S, T, U) wiederholt wird, welche die Nachricht ausschliesslich über den Draht erhalten haben.

8. Verfahren nach einem der Ansprüche 1 bis 7, **dadurch gekennzeichnet, dass** die Nachricht vordringlich von einem drahtgebundenen Knotenpunkt (R, S, T, U) wiederholt wird, welcher die letzte durchgeführte drahtlose Wiederholung der Nachricht nicht erhalten hat.

9. Verfahren zur Kommunikation nach einem der Ansprüche 7 und 8, **dadurch gekennzeichnet, dass** die Vordringlichkeit der Wiederholung in einem zweiten Zeitfenster (T2) vorgenommen wird, welches bei der letzten Wiederholung der Nachricht geöffnet wird, wobei dieses zweite Zeitfenster (T2) den nicht vordringlichen Knotenpunkten zur Verfügung gestellt wird und über dem ersten Zeitfenster (T1) gelegen ist, welches den Prioritäts-Knotenpunkten zur Verfügung gestellt wird.

10. Verfahren nach einem der vorstehenden Ansprüche, **dadurch gekennzeichnet, dass** während einer Kommunikationssitzung ein drahtgebundener Knotenpunkt (R, S, T, U) die gleiche Nachricht drahtgebunden nur einmal wiederholt.

11. Verfahren nach einem der vorstehenden Ansprüche, **dadurch gekennzeichnet, dass** die einzelnen Kommunikationsverbindungen zwischen den einzelnen Knotenpunkten (A, D1, D2, D3, D4, D5, R, S, T, U) des Netzwerkes (1) gespeichert werden, damit Verteilertabellen nach und nach und auf dynamische Art erstellt werden können.

12. Verfahren nach dem vorstehenden Anspruch, **dadurch gekennzeichnet, dass** die drahtgebundenen Knotenpunkte (R, S, T, U) eine Identifizierung der drahtlosen Knotenpunkte (A, D1, D2, D3, D4, D5) speichern, von denen sie drahtlose Nachrichten erhalten.

13. Netzwerk (1) mit sogenannten drahtlosen Knotenpunkten (A, D1, D2, D3, D4, D5), welche Kommunikationsmittel (21, 22) aufweisen, die eine drahtlose Verbindungsübertragung ermöglichen, sowie sogenannten drahtgebundenen Knotenpunkten (R, S, T, U) mit Kommunikationsmitteln (11, 12, 15, 16), welche sowohl eine drahtlose als auch eine drahtgebundene Verbindungsübertragung ermöglichen, **dadurch gekennzeichnet, dass** das Netzwerk Hardware (10, 13, 20, 23) und Software zur Ausführung des Kommunikationsverfahrens nach einem der vorstehenden Ansprüche aufweist.

14. Netzwerk nach Anspruch 13, **dadurch gekennzeichnet, dass** mindestens die drahtgebundenen Knotenpunkte (R, S, T, U) Speichermittel (13) zum Speichern insbesondere der Informationen über die Verteilung der Kommunikationen aufweisen.
